# FASCICULE DE BREVET EUROPEEN

(11) **EP 3 465 888 B1**
(45) Date de publication et mention de la délivrance du brevet: **28.04.2021**
(21) Numéro de dépôt: 17731241.0
(22) Date de dépôt: 31.05.2017
(51) Int. Cl.: H02K 11/33, H02K 3/50, H02K 5/10

(54) **MACHINE ÉLECTRIQUE TOURNANTE MUNIE DE JOINTS D'ÉTANCHÉITÉ**
DREHENDE ELEKTROMASCHINE MIT WASSERDICHTEN DECKELN
ROTATING ELECTRIC MACHINE COMPRISING HERMETIC LIDS

(30) Priorité: 31.05.2016 FR 1654915
(43) Date de publication de la demande: 10.04.2019
(73) Titulaire: Valeo Equipements Electriques Moteur, 94046 Créteil Cedex (FR)
(72) Inventeur: BOUARROUDJ, Lilya, 94046 Creteil (FR); SEIDENBINDER, Régis, 94046 Creteil (FR)
(74) Mandataire: Cardon, Nicolas
(86) Numéro de dépôt international: PCT/FR2017/051365
(87) Numéro de publication internationale: WO 2017/207928

(56) Documents cités:
- US-A1- 2013 099 610
- US-A1- 2014 125 173
- US-A1- 2015 236 570

## Description

La présente invention porte sur une machine électrique tournante munie de joints d'étanchéité. L'invention trouve une application particulièrement avantageuse, mais non exclusive, avec les machines électriques réversibles de forte puissance pouvant fonctionner en mode alternateur et en mode moteur accouplées avec un élément hôte tel qu'une boîte de vitesses.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre sur des paliers par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

Dans certains types de chaînes de traction de véhicule automobile assurant la transmission de la puissance mécanique du moteur thermique vers les roues du véhicule, une machine électrique tournante réversible de forte puissance est accouplée à la boîte de vitesses du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

Dans certaines configurations compactes, la machine est positionnée à l'intérieur du volume délimité par le carter de la boîte de vitesses de telle façon qu'un pignon porté par l'arbre de la machine engrène avec un pignon correspondant de la boîte de vitesses.

La machine électrique peut ainsi être refroidie par le contact de l'huile de la boîte de vitesse avec sa périphérie externe, ainsi que par un circuit de refroidissement interne assurant une projection d'huile via l'arbre pour évacuer la chaleur du bobinage. Dans une telle configuration, l'huile de la boîte de vitesses est donc en contact avec les différentes parties internes et externes de la machine électrique.

En particulier, l'huile est susceptible de venir en contact avec les zones de liaison entre les sorties de phase et les traces du connecteur assurant l'interconnexion entre lesdites sorties de phase et un module électrique de commande. Or, le cuivre étant à nu dans ces zones pour faciliter la soudure, il existe un risque que l'huile de la boîte de vitesses soit polluée par la présence de particules de cuivre provenant de ces zones de contact

Le document US 2015/236570 A1 concerne une machine électrique comportant un connecteur en résine comportant un orifice pour le terminal de commande ; la machine comporte également un orifice dans le carter pour les sorties de phase.

Le document US 2014/125173 A1 concerne une machine électrique comportant un palier avec un orifice traversant pour les sorties de phase ; où le connecteur se trouve axialement bien en dehors du palier, aucun joint d'étanchéité n'est placé entre les deux.

Le document US 2013/099610 A1 concerne une machine électrique comportant un palier avec des orifices pour des sorties de phase, les orifices ayant un support en résine. Un connecteur et une carte de commande se trouvent axialement en dehors du support ; aucun joint d'étanchéité n'est divulgué dans le document.

La présente invention vise à remédier efficacement à cet inconvénient en proposant une machine électrique tournante selon la revendication 1.

L'invention permet ainsi d'étanchéifier la zone de contact entre les sorties de phase et les traces du connecteur et donc d'éviter la pollution de l'huile de l'élément hôte par le cuivre des sorties de phase et le cuivre des traces du connecteur.

Selon une réalisation, la trace comporte une deuxième extrémité terminée par un plot destiné à être connecté à un module électrique de commande. Selon une réalisation, le plot a une extrémité libre, faisant saillie hors de la machine électrique.

Selon une réalisation, le plot fait saillie par rapport à une face externe du connecteur.

L'invention permet ainsi d'éviter la pollution du module électrique de commande par de l'huile de l'élément hôte lorsque cette huile est utilisée pour refroidir les parties actives de la machine électrique. En effet, le module électrique de commande peut être disposé à l'extérieur de la machine électrique, ce module électrique étant ainsi relié électriquement à la machine électrique via le connecteur.

Selon une réalisation, la machine électrique comporte un circuit de refroidissement permettant l'écoulement d'un liquide de refroidissement, en l'occurrence de l'huile, à l'intérieur de la machine.

Selon une réalisation, une périphérie interne de ladite ouverture pour le passage de ladite sortie de phase épouse une périphérie externe de ladite sortie de phase.

Selon une réalisation, ledit joint d'étanchéité comporte au moins une portion en saillie s'étendant axialement et dans laquelle est ménagée ladite ouverture pour le passage de ladite sortie de phase.

Selon l'invention ledit joint d'étanchéité est monté serré entre ledit connecteur et ledit palier.

Selon une réalisation, ledit joint d'étanchéité et ledit connecteur sont fixés l'un à l'autre.

Selon une réalisation, ledit joint d'étanchéité et ladite sortie de phase forment ensemble un fond étanche vis-à-vis d'un matériau d'isolation.

Selon une réalisation, ledit palier comporte un logement en périphérie externe s'étendant autour de ladite sortie de phase et ledit joint d'étanchéité présente une forme complémentaire de ce logement.

Selon une réalisation, ledit joint d'étanchéité comporte une pluralité d'ouvertures autorisant chacune le passage d'une sortie de phase distincte. Selon une réalisation, ledit joint d'étanchéité comporte trois ouvertures pour le passage de trois sorties de phase.

Selon une réalisation, au moins un bouchon est en outre agencé pour empêcher le liquide de refroidissement de passer de l'extérieur de ladite machine électrique tournante vers ladite zone de contact entre ladite première extrémité de ladite trace et ladite sortie de phase.

Selon une réalisation, ledit bouchon comporte une base fixée de façon étanche vis-à-vis d'un liquide de refroidissement autour du trou traversant et sur une face externe dudit connecteur.

Selon une réalisation, ledit bouchon comporte un volume intérieur défini par une paroi latérale à l'intérieur duquel est disposée ladite zone de contact. Selon une réalisation, ledit volume intérieur est fermé du côté opposé à la base par un fond dudit bouchon de manière à former un volume intérieur étanche vis-à-vis du liquide de refroidissement.

Selon une réalisation, ledit bouchon comporte une ouverture d'extrémité axiale du côté opposé à ladite base.

Selon une réalisation, ledit volume intérieur est au moins partiellement rempli par un matériau d'isolation.

Selon une réalisation, le matériau d'isolation est à base de résine.

Selon une réalisation, le joint et le bouchon sont réalisés dans une matière plastique.

Selon une réalisation, les sorties de phase ont une section rectangulaire, ronde, ou en forme de méplat.

La portion en saillie du joint pourra s'étendre de part et d'autre de la portion plane du joint. Cela permet de renforcer la fiabilité de l'étanchéité pour allonger la surface de contact entre les sorties de phase et la périphérie interne du joint. La portion en saillie s'étendant vers l'extérieur de la machine électrique permet de rigidifier le joint pour faciliter le guidage de la sortie de joint jusqu'à la zone de contact.

Suivant une variante de réalisation, le palier s'étend vers l'intérieur de la machine et forme une chemise interne autour des sorties de phase pour recevoir le matériau d'isolation.

Selon une réalisation, le module électrique de commande est agencé pour commander le courant électrique dans les phases de la machine électrique.

L'ensemble des caractéristiques précédentes sont applicables seules ou en combinaison à cet ensemble.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une machine électrique tournante selon la présente invention;
La figure 2 est une vue en perspective de la machine électrique tournante de

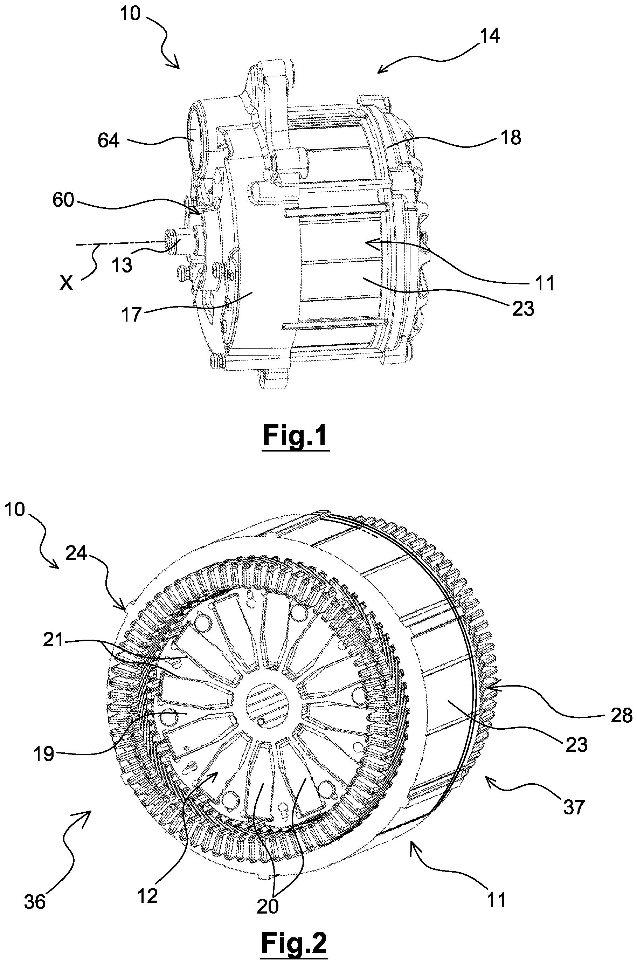

la figure 1 sans le carter;

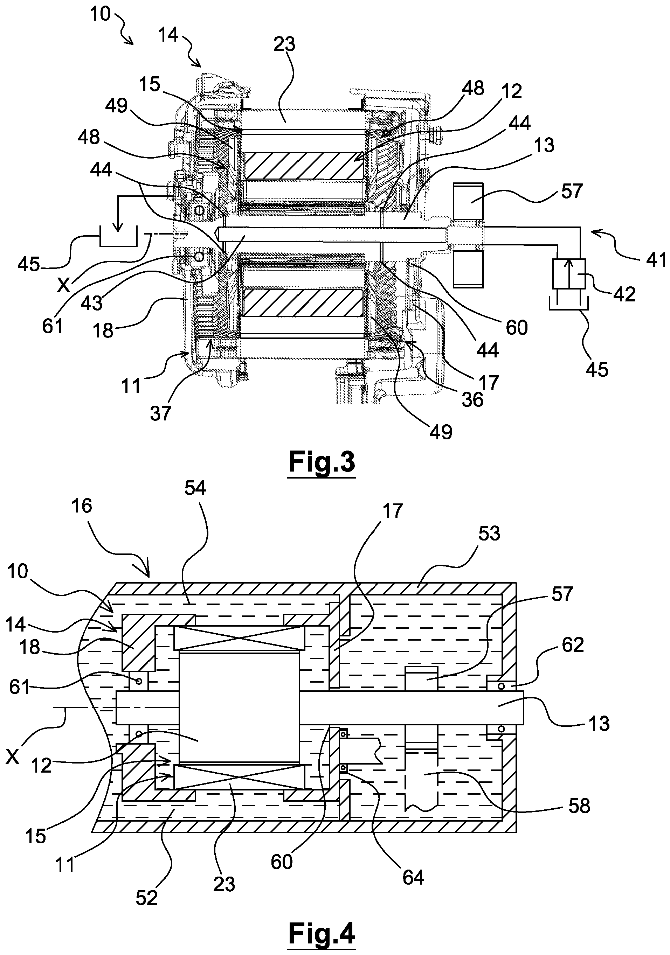

La figure 3 est une vue en coupe longitudinale de la machine électrique tournante selon la présente invention;
La figure 4 est une représentation schématique d'un assemblage de la machine électrique tournante de la figure 1 avec une boîte de vitesses;

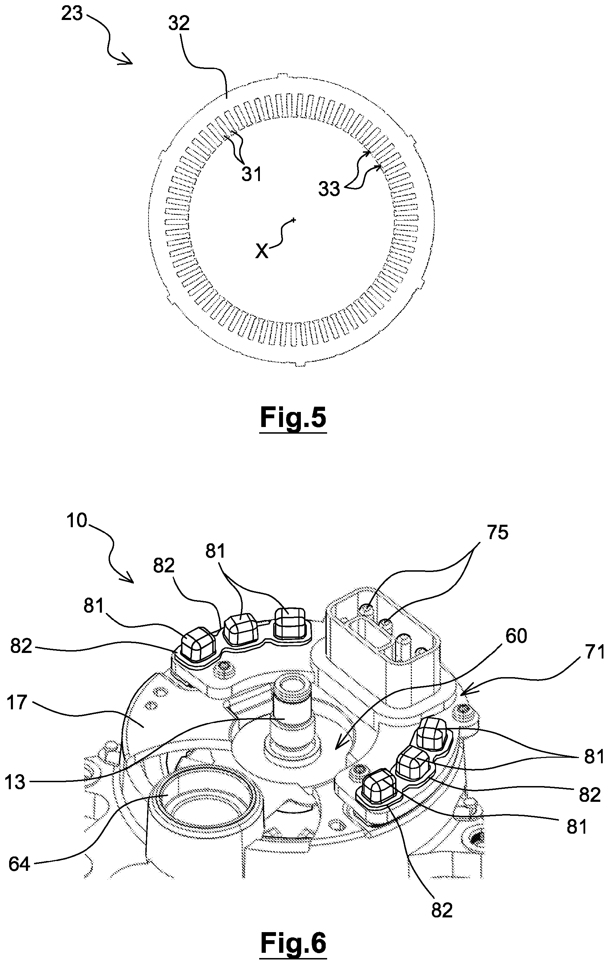

La figure 5 est une vue de dessus d'un stator de la machine électrique tournante selon la présente invention;
La figure 6 est une vue en perspective de l'extrémité de la machine électrique tournante selon l'invention illustrant le positionnement des bouchons d'étanchéité autour des zones de contact entre les sorties de phase et les traces du connecteur;

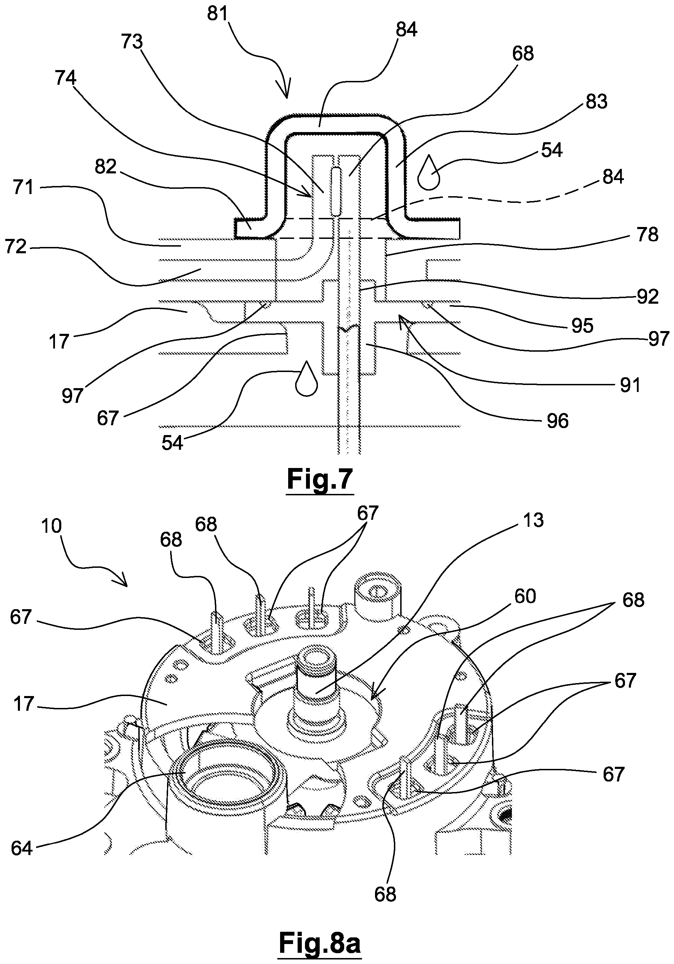

La figure 7 est une vue en vue en coupe transversale illustrant le volume étanche formé par les bouchons et le joint autour d'une zone de contact entre une sortie de phase et une trace de connecteur;
La figure 8a est une vue en perspective illustrant le passage des sorties de phase par des ouvertures correspondantes ménagées dans le palier avant;

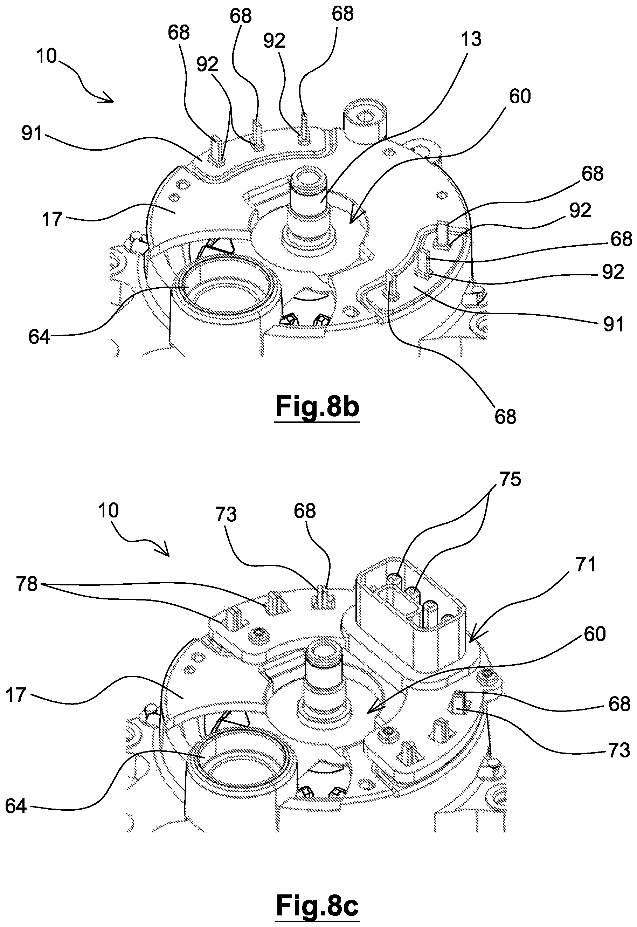

La figure 8b est une vue en perspective illustrant la mise en place du joint sur le palier avant de la machine électrique tournante selon l'invention;
La figure 8c est une vue en perspective illustrant la mise en place du connecteur sur le joint avant la fixation des bouchons montrés sur la figure 6;

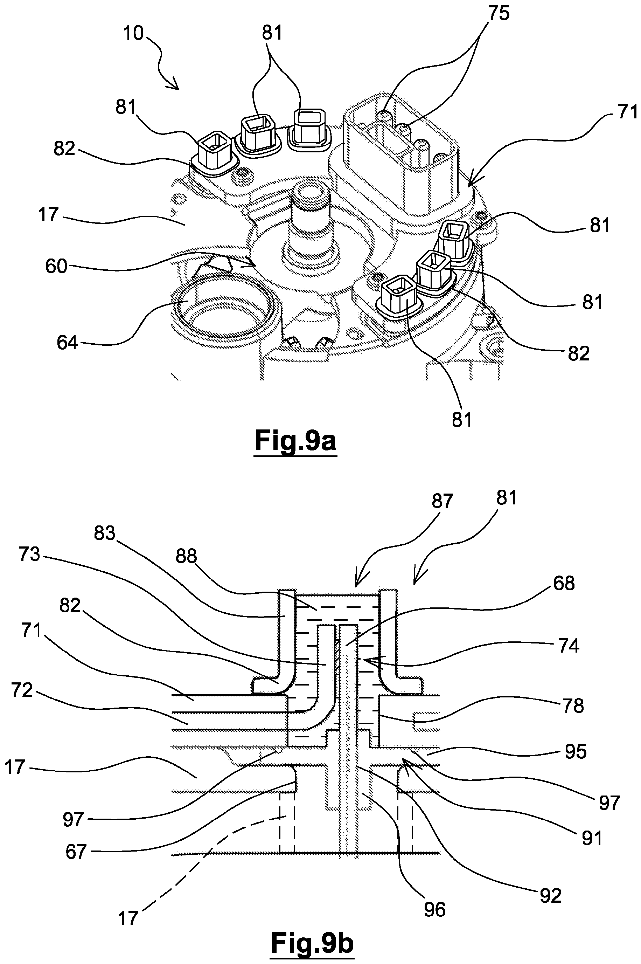

Les figures 9a et 9b sont des vues en perspective et en coupe illustrant un deuxième mode de réalisation des bouchons selon la présente invention.

Les éléments identiques, similaires, ou analogues, conservent la même référence d'une figure à l'autre. Dans la suite de la description, on entend par un élément "avant", un élément situé du côté du pignon porté par l'arbre de la machine et par élément "arrière" un élément situé du côté opposé. En outre, le volume interne de la machine électrique est délimité par le carter et le stator de la machine électrique et le volume externe est situé à l'extérieur du volume délimité par la carter et le stator de la machine électrique.

Les figures 1, 2, et 3 montrent une machine électrique tournante 10 comportant un stator 11 polyphasé entourant un rotor 12 monté sur un arbre 13 d'axe X. Le stator 11 entoure le rotor 12 avec présence d'un entrefer 15 entre la périphérie interne du stator 11 et la périphérie externe du rotor 12. Le stator 11 est monté dans un carter 14 muni d'un palier avant 17 et d'un palier arrière 18 dont la configuration est décrite plus en détails ci-après.

Cette machine électrique 10 est destinée à être accouplée à une boîte de vitesses 16 visible en figure 4 appartenant à une chaîne de traction de véhicule automobile. La machine 10 est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine 10 pourra être comprise entre 15kW et 50kW.

Plus précisément, comme on peut le voir sur la figure 2, le rotor 12 comporte un corps 19 sous la forme d'un paquet de tôles. Des aimants permanents 20 sont implantés dans des cavités 21 du corps 19. Les aimants 20 pourront être en terre rare ou en ferrite selon les applications et la puissance recherchée de la machine 10. La machine 10 est ainsi dépourvue de balai, ce qui autorise son immersion dans le bain d'huile contenu dans la boîte de vitesses 16, comme cela est expliqué ci-après.

Par ailleurs, le stator 11 comporte un corps 23 constitué par un paquet de tôles ainsi qu'un bobinage 24. Le corps 23 est formé par un empilement de feuilles de tôles indépendantes les unes des autres et maintenues sous forme de paquet au moyen d'un système de fixation adapté.

Le corps 23 montré en détails sur la figure 5 est muni de dents 31 s'étendant depuis une périphérie interne d'une culasse annulaire 32 et délimitant deux à deux des encoches 33 pour le montage du bobinage 24 du stator 11. Ainsi, deux encoches 33 successives sont séparées par une dent 31. Les encoches 33 débouchent axialement dans les faces d'extrémité axiale et radialement vers l'intérieur du corps de stator 23.

Le bobinage 24 comporte un ensemble d'enroulements de phase traversant les encoches 33 et formant des chignons 36, 37 s'étendant en saillie de part et d'autre du corps de stator 23 (cf. figure 2). Les enroulements de phase sont obtenus ici à partir d'éléments conducteurs en forme d'épingles reliés entre eux par exemple par soudage. Ces enroulements sont par exemple des enroulements triphasés connectés en étoile ou en triangle. Les sorties de phase 68 de ces enroulements sont destinées à être reliées à un module électrique de commande par l'intermédiaire d'un connecteur 71, comme cela est expliqué plus en détails ci-après.

La machine électrique 10 est refroidie au moyen d'un circuit de refroidissement 41 illustré sur la figure 3 permettant l'écoulement d'un liquide de refroidissement, en l'occurrence de l'huile, à l'intérieur de la machine 10. A cet effet, le circuit de refroidissement 41 comporte une pompe 42 acheminant l'huile dans un alésage axial central 43 réalisé dans l'arbre 13 et vers au moins deux orifices 44 débouchant radialement et disposés axialement de part et d'autre du rotor 12 pour diffuser le liquide de refroidissement à l'intérieur de la machine 10.

Une telle configuration permet ainsi d'acheminer le liquide de refroidissement vers les deux faces d'extrémité axiale du rotor 12. Le circuit de refroidissement 41 fonctionne en boucle fermée, de telle façon que l'huile est prélevée par la pompe 42 dans un réservoir 45 et est récupérée après circulation dans la machine 10 dans ce réservoir 45. Le réservoir 45 pourra correspondre au volume d'huile contenu dans la boîte de vitesses 16.

En outre, le rotor 12 comporte deux flasques 48 plaqués chacun contre une face d'extrémité axiale du rotor 12. Ces flasques 48 assurent une retenue axiale des aimants 20 à l'intérieur des cavités 21 et servent également à équilibrer le rotor 12. Chaque flasque 48 pourra être muni avantageusement d'au moins un organe de projection 49, constitué par une pale, agencé pour projeter par centrifugation le liquide de refroidissement arrivant sur la face d'extrémité correspondante vers les chignons du bobinage 36, 37.

Comme on peut le voir sur la figure 4, la machine 10 est positionnée à l'intérieur du volume 52 délimité par un carter 53 de la boîte de vitesses 16 contenant de l'huile 54 utilisée pour la lubrification des différents composants mécaniques de la boîte de vitesses 16 et pour réaliser le refroidissement de la machine électrique 10. Le liquide de refroidissement est projeté sur la périphérie externe de la machine électrique 10 pour assurer son refroidissement. En l'occurrence, le liquide 54 contenu dans la boîte de vitesses 16 est également utilisé pour refroidir intérieurement la machine 10 via le circuit de refroidissement 41. Toutefois, en variante, un liquide différent de celui contenu dans la boîte de vitesses pourrait être utilisé pour le refroidissement interne de la machine 10.

La machine électrique 10 est disposée dans le volume 52, de telle façon que le pignon 57 porté par l'arbre 13 coopère avec un pignon 58 correspondant de la boîte de vitesses 16. A cet effet, le palier avant 17 est muni d'une ouverture centrale 60 pour autoriser le passage de l'arbre 13. Le palier arrière 18 porte un roulement 61, tel qu'un roulement à billes ou à aiguilles pour le montage à rotation de l'arbre 13.

En outre, l'extrémité libre de l'arbre 13 dépassant du carter 14 de la machine électrique 10 est montée rotative via un roulement 62 porté par le carter 53 de la boîte de vitesses 16 (cf. figure 4). Ainsi, la machine 10 comporte un seul roulement 61, ce qui facilite le montage de la machine 10 à l'intérieur de la boîte de vitesses 16 et limite les risques d'hyperstatisme de l'ensemble.

Le palier avant 17 pourra comporter un support de roulement 64 disposé sur une face radiale. Ce support de roulement 64 est formé par une paroi annulaire s'étendant en saillie par rapport à une surface externe radiale du palier 17. Le support de roulement 64 est destiné à recevoir un roulement d'un arbre de la boîte de vitesses 16.

Comme cela est visible sur les figures 7 et 8a, le palier 17 comporte en outre une pluralité d'ouvertures de phase 67 distinctes de l'ouverture centrale 60. Les ouvertures de phase 67 autorisent le passage des sorties de phase 68 du bobinage statorique.

Par ailleurs, le connecteur 71 comporte une pluralité de traces 72 comportant chacune une première extrémité 73 reliée électriquement à une sortie de phase 68 correspondante, via une zone de contact 74, ainsi qu'une deuxième extrémité terminée par un plot 75 destiné à être connecté à un module électrique de commande (non représenté). La connexion électrique dans la zone de contact 74 entre chaque sortie de phase 68 et l'extrémité 73 d'une trace 72 correspondante pourra être réalisée par soudure avec ou sans ajout de matière. Afin d'assurer une connexion électrique robuste, le cuivre des sorties de phase 68 est à nu au moins partiellement au niveau de la zone de contact 74 du fait du retrait de la couche d'émail. Les sorties de phase 68 pourront par exemple présenter une section rectangulaire, ronde, ou en forme de méplat.

Comme cela est visible en figures 7 et 8c, le connecteur 71 comporte en outre une pluralité de trous traversants 78 pour le passage des sorties de phase 68. Les premières extrémités 73 des traces 72 débouchent chacune dans un trou traversant 78 correspondant.

Un ensemble de bouchons 81 est agencé pour fermer hermétiquement l'extrémité de chaque trou traversant 78 du connecteur 71 débouchant vers l'extérieur de la machine électrique 10. Chaque bouchon 81 empêche ainsi l'huile 54 de passer de l'extérieur de la machine électrique tournante 10 vers une zone de contact 74 correspondante.

A cet effet, chaque bouchon 81 comporte une base 82 fixée de façon étanche vis-à-vis de l'huile autour du trou traversant 78 et sur une face externe du connecteur 71. Le bouchon 81 pourra par exemple être collé ou thermosoudé via sa base 82 sur la face externe du connecteur 71. Les bouchons 81 pourront par exemple être réalisés dans une matière plastique.

En outre, chaque bouchon 81 comporte un volume intérieur délimité par une paroi latérale 83 à l'intérieur duquel est disposée la zone de contact 74. Dans le mode de réalisation des figures 6 et 7, le volume intérieur est fermé du côté opposé à la base 82 par un fond 84 du bouchon 81 de manière à former un volume intérieur étanche vis-à-vis de l'huile provenant de l'extérieur de la machine électrique 10.

Dans le mode de réalisation des figures 9a et 9b, chaque bouchon 81 comporte une ouverture d'extrémité axiale 87 du côté opposé à la base 82. Le volume intérieur délimité par la paroi latérale 83 est alors au moins partiellement rempli par un matériau d'isolation 88 par exemple à base de résine. La zone de contact 74 est au moins partiellement noyée dans ledit matériau d'isolation 88.

Comme cela est illustré sur la figure 6, afin de faciliter leur montage, les bouchons 81 pourront être reliés mécaniquement entre eux via leur base 82 par série de trois.

En outre, un joint d'étanchéité 91 visibles sur les figures 7 et 8b est disposé axialement entre le connecteur 71 et le palier 17 de sorte à fermer hermétiquement l'extrémité du trou traversant 78 du connecteur 71 débouchant vers l'intérieur de la machine électrique. De préférence, chaque joint 91 est monté serré entre le connecteur 71 et le palier 17.

Chaque joint 91, réalisé par exemple dans une matière plastique, comporte plusieurs ouvertures 92, en l'occurrence trois chacun. Chaque ouverture 92 autorise le passage d'une sortie de phase 68. La périphérie interne de chaque ouverture 92 épouse une périphérie externe de la sortie de phase 68.

Le joint 91 est ainsi agencé pour empêcher l'huile 54 de passer de l'intérieur de la machine 10 vers les zones de contact 74 entre les extrémités libres des traces 72 et les sorties de phase 68 correspondantes. Le joint 91 et les bouchons 81 délimitent ainsi autour de chaque zone de contact 74 un volume fermé étanche dans lequel l'huile ne peut pas pénétrer et ne peut donc pas venir en contact avec le cuivre des extrémités 73 dénudées des traces 72 du connecteur 71. On évite ainsi la pollution de l'huile de la boîte de vitesses 16.

Dans un exemple de réalisation, le joint 91 pourra présenter une portion plane 95 de laquelle sont issues des portions en saillie 96 s'étendant axialement de part et d'autre de la portion plane 95. Chaque ouverture 92 est réalisée dans une portion en saillie 96 correspondante. Cela permet de renforcer la fiabilité de l'étanchéité pour allonger la surface de contact entre les sorties de phase 68 et la périphérie interne du joint 91. La portion en saillie 96 s'étendant vers l'extérieur de la machine électrique 10 permet de rigidifier le joint 91 pour faciliter le guidage de la sortie de joint 91 jusqu'à la zone de contact 74. En variante, le joint 91 comporte une portion en saillie 96 s'étendant axialement d'un seul côté de la portion plane 95.

Chaque joint 91 et le connecteur 71 pourront être fixés l'un à l'autre. La fixation pourra par exemple être réalisée par thermosoudure dans des zones référencées 97 et montrées sur les figures 7 et 9b.

Il est à noter que dans le cas de l'injection d'un matériau d'isolation 88, le joint 91 et la sortie de phase 68 forment ensemble un fond étanche vis-à-vis du matériau positionné à l'intérieur du volume délimité par la paroi latérale 83 du bouchon 81.

Avantageusement, le palier 17 comporte deux logements en périphérie externe s'étendant autour de la sortie de phase 68 destinés à recevoir chacun un joint 91 présentant une forme complémentaire. Les logements et les joints 91 s'étendent circonférentiellement à la périphérie de la machine électrique tournante 10.

Suivant une variante de réalisation, chaque bouchon 81 est plan et la zone de contact 74 est disposée axialement entre le bouchon et le palier 17, tel que montré par les pointillés en figure 7.

Suivant une autre variante de réalisation, le palier 17 s'étend axialement vers l'intérieur de la machine électrique 10 et forme une chemise interne autour des sorties de phase 68 pour recevoir le matériau d'isolation 88. Il est alors possible de supprimer le joint 91.

Bien entendu, la description qui précède a été donnée à titre d'exemple uniquement et ne limite pas le domaine de l'invention qui est définie par les revendications annexées.

## Revendications

1. Machine électrique tournante (10), notamment pour véhicule automobile, comportant:
- un stator (11) comportant un bobinage ayant au moins une sortie de phase (68),
- au moins un palier (17) comportant une ouverture centrale (60) pour le passage d'un arbre (13),
- ledit palier (17) comportant en outre au moins une ouverture de phase (67) distincte de ladite ouverture centrale (60) pour le passage de ladite sortie de phase (68),
- un connecteur (71) assurant l'interconnexion entre ladite sortie de phase (68) et un module électrique de commande, le connecteur (71) comportant au moins une trace (72) ayant une première extrémité (73) reliée électriquement à la sortie de phase (68), via une zone de contact (74),
**caractérisée en ce que** ledit connecteur (71) comporte au moins un trou traversant (78) pour le passage de ladite sortie de phase (68) dans lequel débouche ladite première extrémité (73),
- et **en ce qu'**un joint d'étanchéité (91) est disposé axialement entre ledit connecteur (71) et ledit palier (17) de sorte à fermer ledit trou traversant (78) dudit connecteur (71) pour le passage de ladite sortie de phase (68), ledit joint d'étanchéité (91) comportant une ouverture (92) pour le passage de ladite sortie de phase (68),
- ledit joint d'étanchéité (91) étant agencé pour empêcher un liquide de refroidissement de passer de l'intérieur de ladite machine électrique tournante (10) vers ladite zone de contact (74) entre ladite première extrémité (73) de ladite trace (72) et ladite sortie de phase (68),
ledit joint d'étanchéité (91) étant monté serré entre ledit connecteur (71) et ledit palier (17).

2. Machine électrique tournante selon la revendication 1, **caractérisée en ce qu'**une périphérie interne de ladite ouverture (92) pour le passage de ladite sortie de phase (68) épouse une périphérie externe de ladite sortie de phase (68).

3. Machine électrique tournante selon la revendication 1 ou 2, **caractérisée en ce que** ledit joint d'étanchéité (91) comporte au moins une portion en saillie (96) s'étendant axialement et dans laquelle est ménagée ladite ouverture (92) pour le passage de ladite sortie de phase (68).

4. Machine électrique tournante selon l'une quelconque des revendications 1 à 3, **caractérisée en ce que** ledit joint d'étanchéité (91) et ledit connecteur (71) sont fixés l'un à l'autre.

5. Machine électrique tournante selon l'une quelconque des revendications 1 à 4, **caractérisée en ce que** ledit joint d'étanchéité (91) et ladite sortie de phase (68) forment ensemble un fond (84) étanche vis-à-vis d'un matériau d'isolation (88).

6. Machine électrique tournante selon l'une quelconque des revendications 1 à 5, **caractérisée en ce que** ledit palier (17) comporte un logement en périphérie externe s'étendant autour de ladite sortie de phase (68) et ledit joint d'étanchéité (91) présente une forme complémentaire de ce logement.

7. Machine électrique tournante selon l'une quelconque des revendications 1 à 6, **caractérisée en ce que** ledit joint d'étanchéité (91) comporte une pluralité d'ouvertures (92) autorisant chacune le passage d'une sortie de phase (68) distincte.

8. Machine électrique tournante selon la revendication 7, **caractérisée en ce que** ledit joint d'étanchéité (91) comporte trois ouvertures (92) pour le passage de trois sorties de phase (68).

9. Machine électrique tournante selon l'une quelconque des revendications 1 à 8, **caractérisée en ce qu'**au moins un bouchon (81) est en outre agencé pour empêcher le liquide de refroidissement de passer de l'extérieur de ladite machine électrique tournante (10) vers ladite zone de contact (74) entre ladite extrémité (73) de ladite trace (72) et ladite sortie de phase (68).

10. Machine électrique tournante selon la revendication 9, **caractérisée en ce que** ledit bouchon (81) comporte une base (82) fixée de façon étanche vis-à-vis d'un liquide de refroidissement autour du trou traversant (78) et sur une face externe dudit connecteur (71).

11. Machine électrique tournante selon la revendication 9 ou 10, **caractérisée en ce que** ledit bouchon (81) comporte un volume intérieur défini par une paroi latérale (83) à l'intérieur duquel est disposée ladite zone de contact (74).

12. Machine électrique tournante selon les revendications 10 et 11, **caractérisée en ce que** ledit volume intérieur est fermé du côté opposé à la base (82) par un fond (84) dudit bouchon (81) de manière à former un volume intérieur étanche vis-à-vis du liquide de refroidissement.

13. Machine électrique tournante selon les revendications 10 et 11, **caractérisée en ce que** ledit bouchon (81) comporte une ouverture d'extrémité axiale (87) du côté opposé à ladite base (82).

14. Machine électrique tournante selon la revendication 13, **caractérisée en ce que** ledit volume intérieur est au moins partiellement rempli par un matériau d'isolation (88).

## Patentansprüche

1. Rotierende elektrische Maschine (10), insbesondere für ein Kraftfahrzeug, welche umfasst:
- einen Stator (11), der eine Wicklung mit wenigstens einem Phasenausgang (68) umfasst,
- wenigstens ein Lager (17), das eine zentrale Öffnung (60) für den Durchgang einer Welle (13) umfasst,
- wobei das Lager (17) außerdem wenigstens eine Phasenöffnung (67), die von der zentralen Öffnung (60) verschieden ist, für den Durchgang des Phasenausgangs (68) umfasst,
- einen Verbinder (71), der die Verbindung zwischen dem Phasenausgang (68) und einem elektrischen Steuermodul sicherstellt, wobei der Verbinder (71) wenigstens eine Bahn (72) umfasst, die ein erstes Ende (73) aufweist, das über einen Kontaktbereich (74) elektrisch mit dem Phasenausgang (68) verbunden ist,
**dadurch gekennzeichnet, dass** der Verbinder (71) wenigstens ein Durchgangsloch (78) für den Durchgang des Phasenausgangs (68) umfasst, in welches das erste Ende (73) mündet,
- und dadurch, dass eine Dichtung (91) axial zwischen dem Verbinder (71) und dem Lager (17) angeordnet ist, um das Durchgangsloch (78) des Verbinders (71) für den Durchgang des Phasenausgangs (68) zu schließen, wobei die Dichtung (91) eine Öffnung (92) für den Durchgang des Phasenausgangs (68) umfasst,
- wobei die Dichtung (91) dazu eingerichtet ist zu verhindern, dass eine Kühlflüssigkeit aus dem Inneren der rotierenden elektrischen Maschine (10) zum Kontaktbereich (74) zwischen dem ersten Ende (73) der Bahn (72) und dem Phasenausgang (68) gelangt,
wobei die Dichtung (91) zwischen dem Verbinder (71) und dem Lager (17) festgeklemmt angebracht ist.

2. Rotierende elektrische Maschine nach Anspruch 1, **dadurch gekennzeichnet, dass** sich ein Innenumfang der Öffnung (92) für den Durchgang des Phasenausgangs (68) an einen Außenumfang des Phasenausgangs (68) anschmiegt.

3. Rotierende elektrische Maschine nach Anspruch 1 oder 2, **dadurch gekennzeichnet, dass** die Dichtung (91) wenigstens einen vorstehenden Abschnitt (96) umfasst, der sich axial erstreckt und in welchem die Öffnung (92) für den Durchgang des Phasenausgangs (68) ausgebildet ist.

4. Rotierende elektrische Maschine nach einem der Ansprüche 1 bis 3, **dadurch gekennzeichnet, dass** die Dichtung (91) und der Verbinder (71) aneinander befestigt sind.

5. Rotierende elektrische Maschine nach einem der Ansprüche 1 bis 4, **dadurch gekennzeichnet, dass** die Dichtung (91) und der Phasenausgang (68) zusammen einen Boden (84) bilden, der dicht gegenüber einem Isolationsmaterial (88) ist.

6. Rotierende elektrische Maschine nach einem der Ansprüche 1 bis 5, **dadurch gekennzeichnet, dass** das Lager (17) eine Aufnahme am Außenumfang umfasst, die sich um den Phasenausgang (68) herum erstreckt, und die Dichtung (91) eine zu dieser Aufnahme komplementäre Form aufweist.

7. Rotierende elektrische Maschine nach einem der Ansprüche 1 bis 6, **dadurch gekennzeichnet, dass** die Dichtung (91) mehrere Öffnung (92) umfasst, die jeweils den Durchgang eines anderen Phasenausgangs (68) ermöglichen.

8. Rotierende elektrische Maschine nach Anspruch 7, **dadurch gekennzeichnet, dass** die Dichtung (91) drei Öffnung (92) für den Durchgang von drei Phasenausgängen (68) umfasst.

9. Rotierende elektrische Maschine nach einem der Ansprüche 1 bis 8, **dadurch gekennzeichnet, dass** außerdem wenigstens ein Stopfen (81) dazu eingerichtet ist zu verhindern, dass die Kühlflüssigkeit von der Außenseite der rotierenden elektrischen Maschine (10) zum Kontaktbereich (74) zwischen dem ersten Ende (73) der Bahn (72) und dem Phasenausgang (68) gelangt.

10. Rotierende elektrische Maschine nach Anspruch 9, **dadurch gekennzeichnet, dass** der Stopfen (81) einen Unterteil (82) umfasst, der dicht gegenüber einer Kühlflüssigkeit um das Durchgangsloch (78) herum und auf einer Außenseite des Verbinders (71) befestigt ist.

11. Rotierende elektrische Maschine nach Anspruch 9 oder 10, **dadurch gekennzeichnet, dass** der Stopfen (81) ein durch eine Seitenwand (83) definiertes Innenvolumen umfasst, in dessen Innerem der Kontaktbereich (74) angeordnet ist.

12. Rotierende elektrische Maschine nach den Ansprüchen 10 und 11, **dadurch gekennzeichnet, dass** das Innenvolumen auf der dem Unterteil (82) gegenüberliegenden Seite durch einen Boden (84) des Stopfens (81) verschlossen ist, so dass ein Innenvolumen gebildet wird, das dicht gegenüber der Kühlflüssigkeit ist.

13. Rotierende elektrische Maschine nach den Ansprüchen 10 und 11, **dadurch gekennzeichnet, dass** der Stopfen (81) eine axiale Endöffnung (87) auf der dem Unterteil (82) gegenüberliegenden Seite aufweist.

14. Rotierende elektrische Maschine nach Anspruch 13, **dadurch gekennzeichnet, dass** das Innenvolumen wenigstens teilweise mit einem Isolationsmaterial (88) gefüllt ist.

## Claims

1. Rotating electrical machine (10), notably for a motor vehicle, comprising:
- a stator (11) comprising a winding having at least one phase output (68),
- at least one bearing (17) comprising a central aperture (60) for the passage of a shaft (13),
- said bearing (17) further comprising at least one phase aperture (67) distinct from said central aperture (60) for the passage of said phase output (68),
- a connector (71) ensuring the interconnection between said phase output (68) and an electrical control module, the connector (71) comprising at least one trace (72) having a first end (73) linked electrically to the phase output (68), via a contact zone (74),
**characterized in that** said connector (71) comprises at least one through-hole (78) for the passage of said phase output (68) in which said first end (73) emerges,
- and **in that** a seal (91) is disposed axially between said connector (71) and said bearing (17) so as to close said through-hole (78) of said connector (71) for the passage of said phase output (68), said seal (91) comprising an aperture (92) for the passage of said phase output (68),
- said seal (91) being arranged to prevent a coolant from passing from the inside of said rotating electrical machine (10) to said contact zone (74) between said first end (73) of said trace (72) and said phase output (68),
- said seal (91) being clamped between said connector (71) and said bearing (17).

2. Rotating electrical machine according to Claim 1, **characterized in that** an internal periphery of said aperture (92) for the passage of said phase output (68) moulds to an outer periphery of said phase output (68).

3. Rotating electrical machine according to Claim 1 or 2, **characterized in that** said seal (91) comprises at least one protruding portion (96) extending axially and in which is formed said aperture (92) for the passage of said phase output (68).

4. Rotating electrical machine according to any one of Claims 1 to 3, **characterized in that** said seal (91) and said connector (71) are fixed to one another.

5. Rotating electrical machine according to any one of Claims 1 to 4, **characterized in that** said seal (91) and said phase output (68) together form a bottom (84) that is tight with respect to an insulating material (88).

6. Rotating electrical machine according to any one of Claims 1 to 5, **characterized in that** said bearing (17) comprises a recess on the outer periphery extending around said phase output (68) and said seal (91) has a form complementing that recess.

7. Rotating electrical machine according to any one of Claims 1 to 6, **characterized in that** said seal (91) comprises a plurality of apertures (92) each allowing the passage of a distinct phase output (68).

8. Rotating electrical machine according to Claim 7, **characterized in that** said seal (91) comprises three apertures (92) for the passage of three phase outputs (68) .

9. Rotating electrical machine according to any one of Claims 1 to 8, **characterized in that** at least one plug (81) is also arranged to prevent the coolant from passing from the outside of said rotating electrical machine (10) to said contact zone (74) between said end (73) of said trace (72) and said phase output (68).

10. Rotating electrical machine according to Claim 9, **characterized in that** said plug (81) comprises a base (82) fixed tightly with respect to a coolant around the through-hole (78) and on an outer face of said connector (71) .

11. Rotating electrical machine according to Claim 9 or 10, **characterized in that** said plug (81) comprises an internal volume defined by a lateral wall (83) inside which said contact zone (74) is disposed.

12. Rotating electrical machine according to Claims 10 and 11, **characterized in that** said internal volume is closed on the side opposite the base (82) by a bottom (84) of said plug (81) so as to form an internal volume that is tight with respect to the coolant.

13. Rotating electrical machine according to Claims 10 and 11, **characterized in that** said plug (81) comprises an axial end aperture (87) on the side opposite said base (82) .

14. Rotating electrical machine according to Claim 13, **characterized in that** said internal volume is at least partially filled by an insulating material (88).
